Europäisches Patentamt

European Patent Office

Office européen des brevets

(11) Publication number: **0 095 435**
**B1**

## EUROPEAN PATENT SPECIFICATION

(45) Date of publication of patent specification: **26.10.88**

(21) Application number: **83630088.9**

(22) Date of filing: **20.05.83**

(51) Int. Cl.⁴: **A 01 D 57/22, A 01 D 45/02**

(54) Crop gathering head and belt, sprocket and sheave therefor.

(30) Priority: **26.05.82 US 382268**

(43) Date of publication of application:
**30.11.83 Bulletin 83/48**

(45) Publication of the grant of the patent:
**26.10.88 Bulletin 88/43**

(84) Designated Contracting States:
**AT BE DE FR GB IT NL**

(56) References cited:
**BE-A- 563 297**
**CH-A- 493 185**
**DE-A-2 358 454**
**DE-C- 959 505**
**FR-A-2 362 312**
**US-A-2 571 811**
**US-A-3 163 052**
**US-A-3 279 272**
**US-A-3 683 980**
**US-A-4 072 062**
**US-A-4 337 612**

(73) Proprietor: **THE GOODYEAR TIRE & RUBBER COMPANY**
**1144 East Market Street**
**Akron, Ohio 44316-0001 (US)**

(72) Inventor: **Kell, Ralph Warren**
**Route 8**
**Lincoln Nebraska 68506 (US)**

(74) Representative: **Weyland, Joseph Jean Pierre**
**Goodyear Technical Center Luxembourg Patent**
**Department Avenue Gordon Smith**
**L-7750 Colmar-Berg (LU)**

Courier Press, Leamington Spa, England.

## Description

This invention relates to a crop gathering head and more particularly to a belt and sprocket combination for use in a crop gathering machine according to the preamble of claim 1.

There are various configurations of machines to be used in harvesting of crops such as corn in which the stalk of the crop is drawn into the forward end of the gathering portion of the harvester by means of metallic chains including tines of fingers attached thereto. The stalk of the corn enters a narrow slot which is elongated in the fore and aft direction of the machine, i.e. parallel to the direction in which the machine moves. The slot is of sufficient width to accept the stalk but not permit the ears of corn to fall through. A mechanism mounted below the planar faces forming the slot draws the stalk downwardly through the slot thereby separating the ears from the stock. After separation, the ears are conveyed by means of a pair of opposed chains to the rear of the gathering head for further processing; e.g., removal of the husk and separation of the corn kernels from the ear in known manner.

BE—A—563 297 discloses a reinforced elastomeric belt which includes a plurality of generally trapezoidal configuration joined to the bottom surface of the elastomeric belt.

CH—A—493 185 discloses a flexible belt in which a plurality of cleats extend perpendicularly from the top surface of the belt. Each cleat when viewed in longitudinal section of the belt being in triangular configuration with the base of the triangle joined to the top surface of the structure.

US—A—4 072 062 discloses a belt and sprocket combination, the elastomeric belt having a succession of identical cleats and a plurality driving lugs, the driving sprocket having first (upper) and second (lower) sides and comprising a plurality of equally spaced apart, radially projecting teeth separated by a like number of first (upper) and second (lower) cavities, the first (upper) cavities being open to only the first (upper) side of the sprocket and second (lower) cavities being open only to the second (lower) side of the sprocket.

Prior art gathering mechanisms which employ metallic chain and sprockets, although they have been used with considerable success, generate a considerable amount of noise and vibration and of course are subject to rusting and loss of tension as they wear at their links. Additionally, such metallic chains are likely to damage the remainder of the harvesting machine should the chain or a portion of it pass through the mechanism. Also, use of metallic gathering chains at ground speeds of the harvester in excess of about four miles per hour results in very rapid wear of the chains. To extend their service life, metallic chains require periodic lubrication.

The belt and sprocket combination of the present invention is characterized by the means recited in appended Claim 1.

The features and advantages of the invention will be better understood from consideration of the following detailed description taken in conjunction with the accompanying drawings in which primes (e.g. 1 versus 1′) are used to distinguish between various embodiments:

Figure 1 is a top plan view of a crop gathering head embodying the invention;

Figure 2 is an enlarged longitudinal section of a portion of a preferred embodiment of a belt according to the invention;

Figure 3 is an enlarged sectional view illustrating a drive sprocket according to the invention with the belt of the invention engaged therewith being shown in transverse section;

Figure 4 is a side view of a drive sprocket according to the invention;

Figure 5 is a sectional view of a drive sprocket according to the invention, the section being taken along line 5—5 of Figure 4;

Figure 6 is a side view of an idler sheave according to the invention; and

Figure 7 is an end view of the sheave of Figure 6 with the belt of the invention engaged therewith being shown in transverse section.

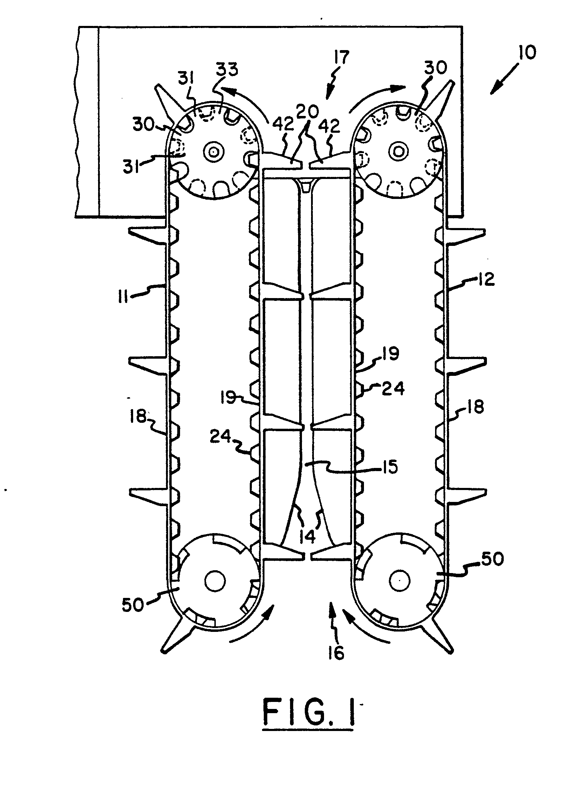

Referring to Figure 1 there is shown a crop gathering head 10 that includes a pair of synchronously driven belts 11A, 12A. Belts 11, 12 run parallel to one another in a common plane located above the metal flanges 14 which form the slot 15 of the crop gathering head 10. The direction of travel of belt 11 is counterclockwise and while the direction of travel of belt 12 is clockwise thus the belts 11 and 12 work in concert to transport ears of corn (not illustrated) from the forward end 16 to the aft end 17 of the crop gathering head 10 after the ears have been snapped off by withdrawing the stalk downwardly through the slot 15 between flanges 14. Belts 11 and 12 as well as their driving systems are identical except for their arrangement on the machine; one being the mirror image of the other.

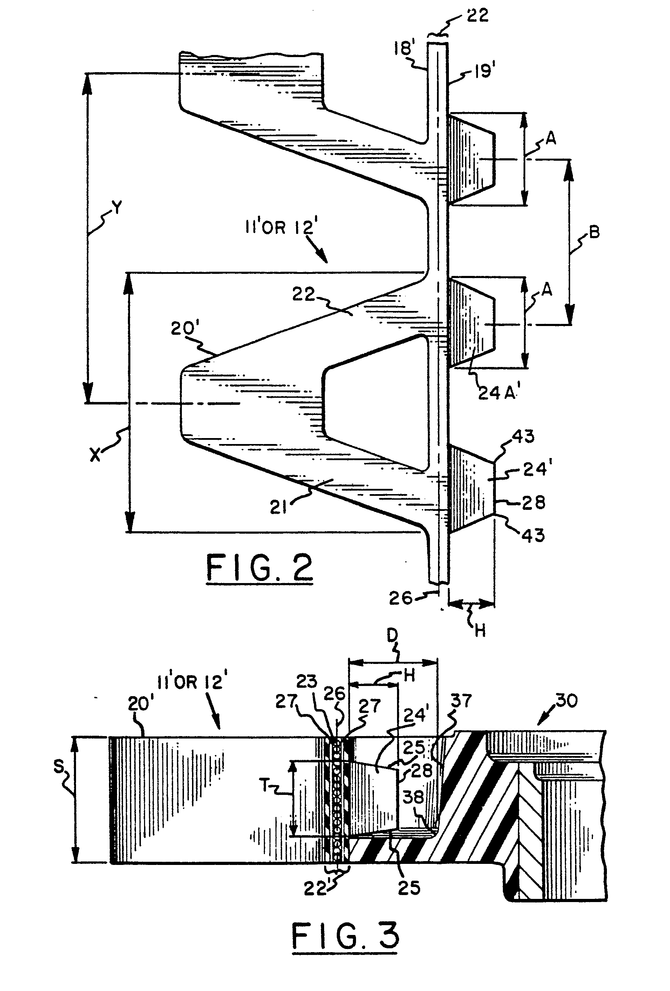

Referring now to Figure 2 in addition to Figure 1, each belt 11, 12 11′, 12′ includes a top surface 18, 18′ and a bottom surface 19, 19′. The top surface 18, 18′ is the surface of the belt 11, 12, 11′, 12′ that is directed away from the drive sprocket 30 and idler sheave 50. The bottom surface 19, 19′ is that surface of the belt 11, 12, 11′, 12′ nearest to the drive sprocket 30 and sheave 50. The top surfaces 18, 18′ of belts 11, 11′ and 12, 12′ are adjacent to and opposed to one another over the crop gathering flanges 14. The top surface 18, 18′ of each gathering belt 11, 12, 11′, 12′ includes a plurality of identical cleats 20, 20′ of elastomeric material. Each cleat 20, 20′ projects substantially perpendicularly from the top surface 18, 18′ of its respective belt. In a preferred embodiment each cleat 20′ when viewed in longitudinal section of the belt 11′, 12′ (as shown in Figure 2) is of triangular configuration with the base of the triangle being joined to the top surface 18′ of the belt. Each cleat 20′ when viewed in longitudinal section of the belt 11′ or 12′ has a longitudinal dimension X at its base. The cleats 20′ are uniformly spaced apart from one another by their pitch Y. The term pitch as employed herein means the distance between succeeding lugs or cleats as measured for a given point on one cleat to the identical point on the next cleat or lug. In the particularly preferred embodiment shown each cleat 20' when viewed in longitudinal section of the belt 11', 12' is a hollow triangle one leg 21 of the triangle extends from the base of the cleat 20' from a point opposite the location of a driving lug 24', the other leg 22 of the triangular configured cleat 20' extends from a point opposite the next driving lug 24A'.

The cleats 20, 20' posses sufficient stiffness so as to positively convey the ears of corn from the forward end 16 to the aft end 17 of the gathering head 10. The hollow triangular configuration 20' shown accomplishes this with a minimum amount of elastomeric material. It is understood that other cleat configurations will work, however. Due to the inherent resilience and flexibility of the elastomeric material of which the cleats are formed, should the harvesting machine become jammed the cleats 20, 20' will then deflect without being damaged or causing damage to other parts of the crop gathering head 10.

A plurality of driving lugs 24, 24' of elastomeric material project from the bottom surface 19, 19' of the belt 11, 12, 11', 12'. Each driving lug 24, 24' projects generally perpendicularly relative to the bottom surface 19, 19' of the belt 11, 12, 11' or 12'. Each driving lug 24 when viewed in a longitudinal section of the belt 11, 12, 11', or 12' is of trapezoidal configuration with the base of the trapezoid joined to the bottom surface 19, 19' of the belt 11, 12, 11', or 12'. Each lug 24, 24' has a longitudinal dimension at its base of A. Succeeding lugs 24, 24' are spaced apart from one another in the longitudinal direction of the belt 11, 12, 11' or 12' by lug pitch B.

Referring now to Figure 3 it is seen that each of the driving lugs 24' when viewed in a transverse section of the belt 11' or 12' is of trapezoidal configuration with the base of the trapezoid joined to the bottom surface 19' of the belt. The base of each cleat 24' has a transverse dimension T which is less than the transverse dimension S of the belt 11' or 12'. The sides 25' of each drive lug 24' converge in a direction away from the bottom surface 19' of the belt 11' or 12'.

Each belt 11, 12, 11' or 12' is of reinforced elastomeric material and includes a flexible reinforced structure 22, 22' having a top surface 18, 18' and a bottom surface 19, 19' located intermediate the crop gathering cleats 20, 20' and the driving lugs 24, 24'. The structure 22, 22' has one or more longitudinally extending high elastic modulus cords 23 embedded therein; the longitudinally extending center plane 26 of the cords defining the pitch line of the belt. A layer 27 of lightweight woven or knitted fabric may be positioned adjacent the top surface 18, 18' and bottom surface 19, 19' of the belt structure 22, 22' to provide increased durability of the belt 11, 12, 11' or 12'.

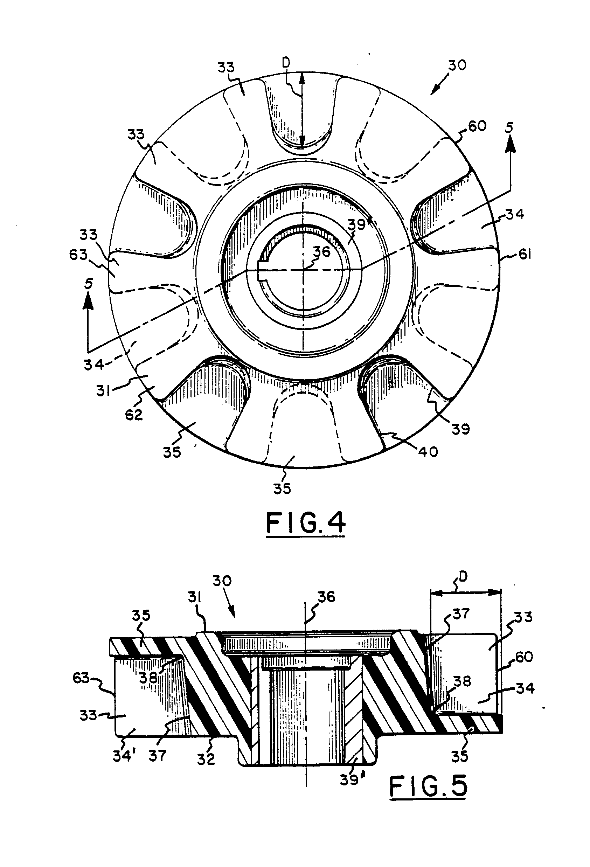

Referring now to Figures 1, 3, 4 and 5 therein is shown a drive sprocket 30 according to the invention, both individually and in conjunction with the belt 11, 12, 11' or 12' of the invention and the gathering head 10 of the invention. Each driving sprocket 30 has a first side 31 and a second side 32 as shown in Figure 5 and includes a plurality of equally spaced apart radially projecting teeth 33 (best seen in Figures 1 and 4 for engagement with the driving lugs 24, 24' of the belt 11, 12, 11' or 12'). Each sprocket tooth 33 is separated from the next adjacent sprocket tooth 33 by a cavity 34 that is open only to one side of the sprocket 30. Referring now to Figure 4 it is seen that the numbers 60 and 61 have between them a cavity 34 that is open only to the first side of the sprocket whereas the numbers 62 and 63 have between them a cavity 34 that is open only to the second side 32 of the sprocket. The sprocket 30 includes a plurality of flange portions 35 located on alternating sides of the sprocket. Each flange portion 35 is of the same radial projection as that of the pair of adjacent teeth between which that flange portion extends. Each flange portion 35 projects generally radially outwardly perpendicularly to the axis of rotation 36 of the sprocket 30. Thus the combination of the alternating flange portions 35 and driving teeth 33 with the lugs of 24, 24' of the belt 11, 12, 11' or 12' positively transmit power to the belt and keep the belt from moving in a direction parallel to the sprocket axis 36 and out of engagement with the driving teeth 33. In a preferred embodiment the teeth 33 of the driving sprocket 30 are of a radial dimension D that is considerably greater than the amount H which a driving lug 24, 24' projects perpendicularly from the bottom surface 19, 19' of the belt 11, 12, 11' or 12'. This considerable clearance between the tips 28 of the driving lugs 24, 24' and the bottoms 37 of the cavities 34 is provided to inhibit disengagement of the belt 11, 12, 11' or 12' through entrainment and entrapment of the crop or debris such as mud, ice and rocks which may be encountered under certain harvesting conditions, for example, when the crop has fallen over and is not standing upright at the time of harvest. Because each cavity 34 is open to a side of the drive sprocket 30 any material which would otherwise be entrained in the bottom 37 of the cavity 34 is free to exit to the side. Preferably the bottom surface 37 of each sprocket cavity 34 slopes toward the axis of rotation 36 of the sprocket 33 in a direction away from the respective flange portion 35 to facilitate self-cleaning of the sprocket. It is preferable that the radially projecting flange portion 35 be connected to the cavity bottom surface 37 by an arcuate surface 38 to facilitate self cleaning. The fore and aft surfaces 39, 40 respectively of the cavity 34 should join to the bottom surface 37 of the cavity via arcuate surfaces or the bottom surface 37 of the cavity 34 should itself be an arcuate surface as shown. In the accompanying drawing the bottom surfaces 37 are shown to be conical. When these curved surfaces are combined as described and shown in Figures 4 and 5 the engagement of the driving lugs 24, 24' of the belt 11, 12 11' or 12' with its associated sprocket 30 serves to push downwardly and outwardly any debris that may otherwise become entrapped in the drive sprocket 30.

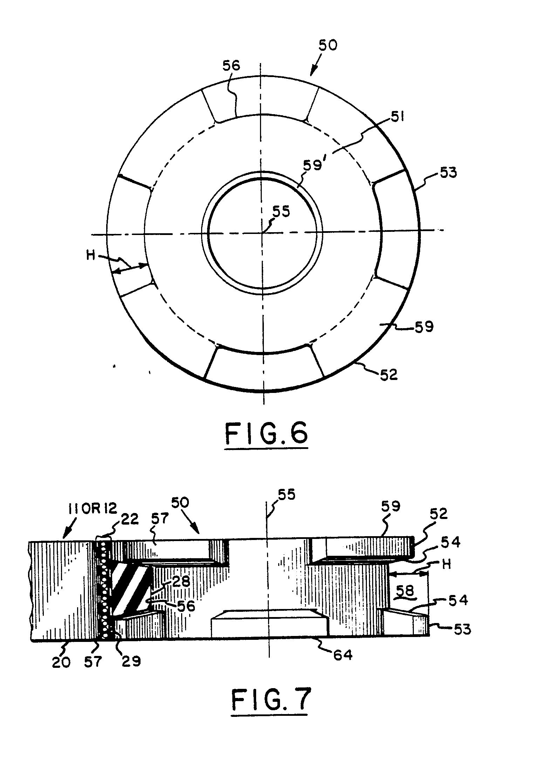

Referring now to Figures 6 and 7 as well as Figure 1 there is shown a sheave 50 or idler pulley according to the invention. The sheave includes a cylindrical hub 51. A pair of axially spaced flanges 52, 53 project radially from the hub 51. The inner side surfaces 54 of the flanges 52, 53 converge in a direction toward the axis of rotation 55 of the sheave 50 forming a circumferentially extending groove 58 between them. Each of the flanges 52, 53 is interrupted in the circumferential direction of the sheave 50. The interruptions of one of the flanges 52 are not aligned with the interruptions of the other 53. As shown in Figure 7 the height H of each drive lug 24' corresponds to the radial projection of the flanges 52 and 53. Thus in the belt and sheave combination as the belt 11, 12, 11' or 12' engages the sheave 30 the tips 28 of the drive lugs 24' contact the outer cylindrical surface 56 of the hub 51 and the edge portions 29 of the belt structure 22 contact the radially outermost surfaces 57 of the flanges 52, 53. The flanges 52, 53 of the sheave 50 are axially spaced apart so that the drive lugs 24' do not wedge between the flanges 52, 53 as in a conventional V-belt and pulley system. The flanges 52, 53 serve to guide the belt. The flanges 52, 53 are not intended to transmit power from the belt 11, 12, 11', or 12' to the sheave 50. Because the flanges 52, 53 are interrupted in the circumferential direction of the sheave 50 foreign material that might otherwise become entrapped in the bottom of the circumferential groove 58 of the sheave 50 is able to exit to the sides 59, 64 of the sheave 50. In a preferred embodiment the circumferential distance between the interruptions of each flange 52, 53 of the sheave 50 is not an integral multiple of the driving lug pitch B so as to ensure that all portions of the sheave 50 eventually contact the longitudinal sides 25 of the driving lugs 24 and thereby even out wear of the belts 11 or 12 and associated sheave 50. The interruptions of one flange 52 are not aligned with the interruptions of the other flange 53 so as to assure guiding and control of the belt 11 or 12 at all times. The interruptions of the flanges need not be of the same circumferential extent shown to be effective. The particular embodiment shown facilitates molding of the sheave.

The main reinforcing cords 23 of the belt 11 or 12 are of high tensile modulus material. Fiberglass or aramid are preferred for cords 23 although it is believed that nylon, polyester or the like may also be employed. High tensile loading of the belt 11, 12, 11' or 12' can occur at those times when an ear of corn or a stalk becomes lodged in the machine.

The driving lugs 24, 24' of the belt 11, 12, 11' or 12' of the preferred embodiment described and shown herein are of truncated pyramidal configuration and are not involute or conjugate. The sprocket 50 as shown is of a design that facilitates entry and exit of the driving lugs 24, 24' of the belt 11, 12, 11' or 12' by providing clearance for the corners 43 and tip 28 of each driving lug 24, 24'. Belts have been made utilizing elastomer material that is a blend of natural rubber and synthetic isoprene blended. However, it is believed that other elastomeric or resilient materials for exmple, chloroprene or polyurethane or the like would serve equally well.

Referring to Figure 1 it is seen that the leading edge 42 of each cleat 24 of the belt 11 or 12 is preferably tapered. The tapered leading edges 42 of each pair of opposed cleats thus tend to force the dislodged ears of corn toward the fore and aft directed centerline of the gathering head 10 and facilitate withdrawal of each cleat 20 from the ear(s) of corn that it is conveying as the cleat begins to rotate around its associated drive sprocket 30 at the aft end 17 of the gathering head 10. The triangular configuration of the cleats 20' of belt 11 or 12' provide tapered leading edges to similarly facilitate withdrawal of each cleat 20' from the ears of corn.

The sprockets 30 and sheaves 50 are preferably made of ultra high molecular weight polyethylene. This material possesses sufficient strength and rigidity for this application. Use of this material is advantageous because it is not subject to rusting or corrosion and its low coefficient of friction aids in the desired self-cleaning action. Of course, plastics including reinforced plastics or metals may be used in construction of the sprockets and sheaves. When ultra high molecular weight polyethylene is used, each sprocket or sheave preferably includes a metal insert 39' or 59' concentrically positioned in its hub.

The cleats 20 are shown in Figure 1 to be aligned with one another. This is not required. The cleats 20 may be staggered relative to one another.

It is to be understood that the relative positions of the driving sprockets and idler sheaves could be reversed such that the driving sprockets would be located at the forward end 16 of the machine that first engages the crop.

**Claims**

1. A belt (11, 12) and sprocket (30) combination having:

(a) a belt (11, 12) formed of resilient elastomer having a top (18) and bottom surface (19), a succession of identical cleats (20) of elastomeric material projecting generally perpendicularly from the top surface (18) and spaced apart from one another by their pitch (Y) and a plurality of elastomeric driving lugs (24) projecting substantially perpendicularly from the bottom surface (19) of the structure; each of said lugs being spaced longitudinally apart from the next adjacent lug by the lug pitch (B) each lug being of a longitudinal dimension (A) at its base;

(b) a driving sprocket (30) having first (31) and second (32) sides comprising a plurality of equally spaced apart, radially projecting teeth (33) separated by a like number of first (34) and second (34 prime) cavities, said first cavities (34) being open only to the first side (31) of the sprocket (30) said second cavities (34 prime) being open only to the second side (32) of the sprocket (30) characterized in that:

said belt includes a flexible reinforced structure (22), said structure having one or more longitudinally extending high elastic modulus cords (23) imbedded therein defining the pitch line (26) of the belt (12), and the combination being further characterised by

(c) a sheave (50) comprising a cylindrical hub (51) including a pair of axially spaced flanges (52, 53) projecting radially therefrom whose inner surfaces (54) converge in a direction toward the axis of rotation (55) of the sheave (50), each flange (52, 53) being interrupted in the circumferential direction of the sheave, the interruptions of one of said flanges not being aligned with the interruptions of the other, the interruptions being spaced apart from one another an amount that is not an integral multiple of the driving lug pith (B).

2. The combination of Claim 1 wherein the sprocket (30) is further characterized in that each cavity (34) is defined by the fore (39) and aft (40) surfaces of a pair of adjacent teeth (62, 63) and a radially projecting flange portion (35) that extends circumferentially between a pair of adjacent teeth (62, 63) and an arcuate bottom surface (37).

3. The combination of Claim 1 wherein the sprocket (30) is further characterized by a plurality of flange portions (35) on alternating sides of the sprocket, each flange portion being of the same radial projection as that of the pair of adjacent teeth (60, 61) between which the flange portion (35) extends, each flange portion projecting radially outwardly perpendicularly of the axis of rotation (36) of the sprocket (30), the bottom surface (37) of each cavity (34) sloping toward the axis of rotation (36) in a direction away from the respective flange portion (35).

4. The combination of Claim 1 characterized in that the surface (37) defining the bottom of each cavity (34) of the sprocket and that the surface of the respective flange portion defining the maximum axial extent of each cavity are joined to one another by a curved surface (38).

5. A combination of Claim 1 where the radially projecting teeth have first and second axial ends and are separated by a plurality of cavities (34) wherein for each group of three consecutive teeth (60, 62, 63) the first axial end of the first tooth is joined only to the first axial end of the second tooth and the second axial end of the second tooth is joined only to the second axial end of the third tooth.

6. The combination of Claim 1 characterized in that the distance that each drive lug (24) projects away from the bottom surface (19) of the belt (12) is substantially equal to the distance that each flange of the sheave (50) projects radially outwardly from the cylindrical hub (51) of the sheave (50) such that that portion of the belt engaged with the sheave is supported by contact of the tip (28) of each drive lug (24) with the cylindrical hub (51) of the sheave while the flanges (52, 53) of the sheave contact the bottom surface (19) of the flexible reinforced structure on both sides of the driving lugs (24).

7. The combination of Claim 1 characterized in that each of said lugs (24) when viewed in a longitudinal section of the belt is of tapezoidal configuration with the base of the trapezoid being joined to the bottom surface (19), each of said lugs (24) when viewed in a transverse section of the belt being of trapezoidal configuration with the base of the trapezoid being joined to the bottom surface (19) of the structure (22) and having a transverse dimension less than that of the structure, the sides (43) of each of said driving lugs (24) converging in a direction away from the bottom surface of the structure.

8. The combination of Claim 1 characterized in that the depth (D) of the cavities (24) in the drive sprocket (30) exceeds the height (H) of the drive lugs (24).

9. The combination of Claim 1 characterized in that the fore (39) and aft (40) surfaces of the teeth (33) of the drive sprocket (30) converge in a direction toward the axis of rotation (36) of the sprocket (30).

**Patentansprüche**

1. Anordnung aus Bad (11, 12) und Zahnrad (30), mit

(a) einem Band (11, 12), das aus einem elastischen Elastomeren mit einer oberen (18) und einer unteren Seite (19), aus einer Aufeinanderfolge von identischen Stollen (20) aus elastomerem Material, die im wesentlichen senkrecht von der oberen Seite (18) abragen und voneinander einen Abstand (Y) aufweisen, und aus einer Vielzahl von elastomeren Antriebszähnen (24) besteht, die im wesentlichen senkrecht von der unteren Seite (19) des Aufbaus abragen, wobei jeder Zahn in Längsrichtung von dem nächsten benachbarten Zahn einen Zahnabstand (B) und an seiner Basis eine Längserstreckung (A) aufweist,

(b) einem Antriebszahnrad (30) mit einer ersten (31) und einer zweiten (32) Seite, die eine Vielzahl von gleichmäßig beabstandeten radial vorragenden Zähnen (33) aufweisen, die von einer gleichen Anzahl erster (34) und zweiter (34') Hohlräume getrennt sind, wobei die ersten Hohlräume (34) nur zu der ersten Seite (31) des Zahnrads (30) und die zweiten Hohlräume (34') nur zu der zweiten Seite (32) des Zahnrads (30) geöffnet sind, dadurch gekennzeichnet, daß

das Band einen elastischen Verstärkungsaufbau (22) aufweist, daß der Aufbau einen oder mehrere sich in Längsrichtung erstreckende Corde (23) mit großem Elastizitätsmodul aufweist, die darin eingebettet sind und die die Teilungslinie (26) des Bandes (12) bilden, und daß die Anordnung ferner charakterisiert ist durch

(c) eine Umlenkrolle (50) mit einer zylindrischen Nabe (51), die ein Paar von axial beabstandeten Flanschen (52, 53) aufweist, die radial von dieser abstehen und deren Innenflächen (54) in Richtung zu der Drehachse (55) der Umlenkrolle (50) konvergieren, wobei jeder Flansch (52, 53) in Umfangsrichtung der Umlenkrolle unterbrochen ist, wobei die Unterbrechungen des einen Flansches nicht zu den Unterbrechungen des anderen ausgerichtet sind, und wobei die Unterbrechungen voneinander einen Abstand aufweisen, der kein ganzzahlig Vielfaches des Abstandes (B) der Antriebszähne ist.

2. Anordnung nach Anspruch 1, wobei das Zahnrad (30) ferner dadurch gekennzeichnet ist, daß jeder Hohlraum (34) von der vorderen (39) und hinteren (40) Fläche eines Paares benachbarter Zähne (62, 63), einem radial abragenden Flanschabschnitt (35), der sich in Umfangsrichtung zwischen einem Paar benachbarter Zähne (62, 63) erstreckt, und einer gebogenen Bodenfläche (37) begrenzt wird.

3. Anordnung nach Anspruch 1, wobei das Zahnrad (30) ferner gekennzeichnet ist durch eine Vielzahl von Flanschabschnitten (35) an abwechselnden Seiten des Zahnrades, wobei jeder Flanschabschnitt aus dem gleichen radialen Vorsprung wie der des Paares benachbarter Zähne (60, 61) besteht, zwischen welchen sich der Flanschabschnitt (35) erstreckt, wobei jeder Flanschabschnitt radial nach außen senkrecht zur Drehachse (36) des Zahnrades (30) vorragt, und wobei die Bodenfläche (37) jedes Hohlraumes (34) zur Drehachse (36) in einer Richtung weg von dem jeweiligen Flanschabschnitt (35) geneigt ist.

4. Anordnung nach Anspruch 1, dadurch gekennzeichnet, daß die Fläche (37), die den Boden jedes Hohlraums (34) des Zahnrades begrenzt, und die Fläche des jeweiligen Flanschabschnitts, die die maximale axiale Erstreckung jedes Hohlraums begrenzt, durch eine gekrümmte Fläche (38) miteinander verbunden sind.

5. Anordnung nach Anspruch 1, wobei die sich radial erstreckenden Zähne ein erstes und die zweites axiales Ende aufweisen und durch eine Vielzahl von Hohlräumen (34) getrennt sind, wbei für jede Gruppe von drei aufeinanderfolgenden Zähnen (60, 62, 63) das erste axiale Ende des ersten Zahnes nur mit dem ersten axialen Ende des zweiten Zahnes und das zweite axiale Ende des zweiten Zahnes nur mit dem zweiten axialen Ende des dritten Zahnes verbunden ist.

6. Anordnung nach Anspruch 1, dadurch gekennzeichnet, daß der Abstand, in dem jeder Antriebszahn (24) von der unteren Seite (19) des Bandes (12) abragt, im wesentlichen gleich ist dem Abstand, um den jeder Flansch der Umlenkrolle (50) radial nach außen von der zylindrischen Nabe (51) der Umlenkrolle (50) vorragt, so daß ein Abschnitt des Bandes, der mit der Umlenkrolle im Eingriff ist, durch Kontakt der Spitze (28) jedes Antriebszahnes (24) mit der zylindrischen Nabe (51) der Umlenkrolle gestützt wird, während die Flansche (52, 53) der Umlenkrolle die untere Seite (19) des elastischen verstärkten Aufbaus an beiden Seiten der Antriebszähne (24) berührt.

7. Anordnung nach Anspruch 1, dadurch gekennzeichnet, daß jeder Antriebszahn (24) gesehen in einem Längsschnitt des Bandes eine trapezförmige Gestalt aufweist, wobei die Basis des Trapezes mit der unteren Seite (19) verbunden ist, daß jeder der Zähne (24) gesehen in einem Querschnitt des Bandes eine trapezförmige Gestalt aufweist, wobei die Basis des Trapezes mit der unteren Seite (19) des Aufbaus (22) verbunden ist und eine Querabmessung aufweist, die geringer ist als die des Aufbaus, und daß die Seiten (43) jedes der Antriebszähne in Richtung weg von der unteren Seite des Aufbaus konvergieren.

8. Anordnung nach Anspruch 1, dadurch gekennzeichnet, daß die Tiefe (D) der Hohlräume (24) in dem Abtriebszahnrad (30) größer ist als die Höhe (H) der Antriebszähne (24).

9. Anordnung nach Anspruch 1, dadurch gekennzeichnet, daß die vordere (39) und die hintere (40) Fläche der Zähne (33) des Antriebszahnrades (30) in Richtung zur Drehachse (36) des Zahnrades (30) hin konvergieren.

**Revendications**

1. Combinaison d'une courroie (11, 12) et d'un pignon (30), comprenant:

(a) une courroie (11, 12) constituée d'un élastomère élastique ayant une surface supérieure (18) et une surface inférieure (19), une succession de taquets identiques (20) en matière élastomère ressortant généralement en saillie perpendiculairement de la surface supérieure (18) et espacés l'un de l'autre par leur pas (Y), ainsi que plusieurs oreilles d'entraînement en matière élastomère (24) ressortant pratiquement perpendiculairement en saillie de la surface inférieure (19) de la structure, chacune de ces oreilles étant espacés longitudinalement de l'oreille adjacente suivante d'une distance égale au pas (B) de ces oreilles, chacune de celles-ci ayant une dimension longitudinale (A) à sa base;

(b) un pignon d'entraînement (30) ayant un premier (31) et un deuxième (32) côté comprenant plusieurs dents équidistantes ressortant radialement en saillie (33) et séparées par un nombre égal de premières (34) et de deuxièmes (34') cavités, ces premières cavités (34) étant ouvertes uniquement vers le premier côté (31) du pignon (30), tandis que les deuxièmes cavités (34') sont ouvertes uniquement vers le deuxième côté (32) du pignon (30), caractérisée en ce que:

la courroie comporte une structure flexible renforcée (22), un ou plusieurs câblés (23) d'un haut module d'élasticité et s'étendant dans le sens longitudinal étant enrobé(s) dans cette structure en y définissant la ligne primitive (26) de la courroie (12), cette combinaison étant, en outre, caractérisée par:

(c) un réa (50) comportant un moyeu cylindrique (51) comprenant deux brides espacées axialement (52, 53) qui en ressortent radialement en saillie et dont les surfaces intérieures (54) convergent dans une direction orientée vers l'axe de rotation (55) du réa (50), chaque bride (52, 53) étant interrompue dans le sens circonférentiel du réa, les interruptions d'une de ces brides n'étant pas en alignement avec les interruptions de l'autre bride, ces interruptions étant espacées l'une de l'autre d'une distance qui n'est pas un multiple entier du pas (B) des oreilles d'entraînement.

2. Combinaison selon la revendication 1, dans laquelle le pignon (30) est, en outre, caractérisé en ce que chaque cavité (34) est définie par les surfaces avant (39) et arrière (40) d'une paire de dents adjacentes (62, 63), ainsi que par une partie formant bride ressortant radialement en saillie (35) s'étendant dans le sens circonférentiel entre deux dents adjacentes (62, 63) et une surface de fond courbe (37).

3. Combinaison selon la revendication 1, dans laquelle le pignon (30) est, en outre, caractérisé en ce qu'il comporte plusieurs parties formant brides (35) sur des côtés alternés du pignon, chaque partie formant bride ressortant radialement en saillie sur la même distance que celle de la paire de dents adjacentes (60, 61) entre lesquelles s'étend la partie formant bride (35), chaque partie formant bride ressortant radialement en saillie vers l'extérieur perpendiculairement à l'axe de rotation (36) du pignon (30), la surface (37) du fond de chaque cavité (34) étant inclinée en direction de l'axe de rotation (36) dans une direction s'écartant de la partie respective formant bride (35).

4. Combinaison selon la revendication 1, caractérisée en ce que la surface (37) définissant le fond de chaque cavité (34) du pignon et la surface de la partie respective formant bride et définissant la portée axiale maximale de chaque cavité sont réunies l'une à l'autre par une surface courbe (38).

5. Combinaison selon la revendication 1, dans laquelle les dents ressortant radialement en saillie comportent des première et deuxième extrémités axiales et sont séparées par plusieurs cavités (34), tandis que, pour chaque groupe de trois dents consécutives (60, 62, 63), la première extrémité axiale de la première dent est réunie uniquement à la première extrémité axiale de la deuxième dent, la deuxième extrémité axiale de la deuxième dent étant réunie uniquement à la deuxième extrémité axiale de la troisième dent.

6. Combinaison selon la revendication 1, caractérisée en ce que la distance sur laquelle chaque oreille d'entraînement (24) ressort en saillie à l'écart de la surface inférieure (19) de la courroie (12) est pratiquement égale à la distance sur laquelle chaque bride du réa (50) ressort radialement vers l'extérieure du moyeu cylindrique (51) du réa (50), tant et si bien que la partie de la courroie venant s'engager dans le réa est supportée suite au contact de l'extrémité (28) de chaque oreille d'entraînement (24) avec le moyeu cylindrique (51) du réa, tandis que les brides (52, 53) de ce dernier entrent en contact avec la surface inférieure (19) de la structure flexible renforcée, de part et d'autre des oreilles d'entraînement (24).

7. Combinaison selon la revendication 1, caractérisée en ce que, vue en coupe dans le sens longitudinal de la courroie, chacune des oreilles (24) a une configuration trapézoïdale dont la base est réunie à la surface inférieure (19), chacune de ces oreilles (24) ayant, vue en coupe transversale dans la courroie, une configuration trapézoïdale dont la base est réunie à la surface inférieure (19) de la structure (22), tout an ayant une dimension transversale inférieure à celle de la structure, les côtés (43) de chacune de ces oreilles d'entraînement (24) convergeant dans une direction s'écartant de la surface inférieure de la structure.

8. Combinaison selon la revendication 1, caractérisée en ce que la profondeur (D) des cavités (24) pratiquées dans le pignon d'entraînement (30) dépasse la hauteur (H) des oreilles d'entraînement (24).

9. Combinaison selon la revendication 1, caractérisée en ce que les surfaces avant (39) et arrière (40) des dents (33) du pignon d'entraînement (30) convergent en direction de l'axe de rotation (36) du pignon (30).

<u>FIG. 1</u>

FIG. 2

FIG. 3

FIG.4

FIG.5

FIG.6

FIG.7